# EUROPÄISCHE PATENTSCHRIFT

(11) **EP 4 197 816 B1**
(45) Veröffentlichungstag und Bekanntmachung des Hinweises auf die Patenterteilung: **12.03.2025**
(21) Anmeldenummer: 22203321.9
(22) Anmeldetag: 24.10.2022
(51) Int. Cl.: B60C 11/03

(54) **FAHRZEUGLUFTREIFEN**
PNEUMATIC TYRE FOR VEHICLES
BANDAGE PNEUMATIQUE POUR VÉHICULE

(30) Priorität: 16.12.2021 DE 102021214496
(43) Veröffentlichungstag der Anmeldung: 21.06.2023
(73) Patentinhaber: Continental Reifen Deutschland GmbH, 30175 Hannover (DE)
(72) Erfinder: Wanka, Thomas, 30165 Hannover (DE); Herbst, Stephan, 30165 Hannover (DE); Rittweger, Stefan, 30165 Hannover (DE)
(74) Vertreter: Continental Corporation

(56) Entgegenhaltungen:
- EP-B1- 3 388 256
- CN-B- 109 789 737

## Beschreibung

Die Erfindung betrifft einen Fahrzeugluftreifen mit einem Laufstreifen mit zumindest einer durch eine Umfangsrille begrenzten schulterseitigen Profilrippe mit einer Rippenaußenfläche in der Laufstreifenperipherie sowie mit einem innerhalb der Bodenaufstandsfläche verlaufenden Rippeninnenabschnitt und einem außerhalb der Bodenaufstandsfläche verlaufenden Rippenaußenabschnitt, wobei in der schulterseitigen Profilrippe sowohl im Rippeninnenabschnitt als auch im Rippenaußenabschnitt verlaufende, vor der Umfangsrille endende Querrillen mit einer in Umfangsrichtung ermittelten maximalen Breite von 3,0 mm bis 8,0 mm ausgebildet sind, wobei jede Querrille zwei an der Rippenaußenfläche liegende Rillenkanten aufweist und durch einen Rillengrund und zwei von je einer der Rillenkanten ausgehenden Rillenwänden begrenzt ist, wobei die Rillenwände jeweils eine einzige von der Rillenkante ausgehende, in Erstreckungsrichtung der Querrille langgestreckte Schrägfläche aufweisen.

Ein derartiger Fahrzeugluftreifen ist beispielsweise aus DE 10 2019 206 654 A1 bekannt. Der Reifen weist einen Laufstreifen mit Querrillen mit einer maximalen Breite von 5,0 mm bis 7,0 mm, zwei Rillenkanten und zwei Rillenwänden mit je einer von der zugehörigen Rillenkante ausgehenden Fase (Schrägfläche) mit einem dreieckigen Fasenauslauf auf. Der dreieckige Fasenauslauf der ersten Fase ist von einer Fasenkante begrenzt, die zweite Fase ist von einer zweiten Fasenkante begrenzt. Die Fasenkante der zweiten Fase kontaktiert mit einem endseitigen Fasenkantenabschnitt eine von der Fasenkante der ersten Fase ausgehende Stützfläche. Durch derart "ineinander verschachtelte" Fasen verkürzen sich die Fasenkanten bei fortschreitendem Laufstreifenabrieb nur langsam und die Fasen sowie die Fasenkanten verschwinden nicht mehr schlagartig, wodurch gute Bremseigenschaften auf trockner Fahrbahn auch bei weiter fortgeschrittenem Laufstreifenabrieb erhalten bleiben.

Aus der DE 10 2016 219 017 A1 ist ein Fahrzeugluftreifen mit einem Laufstreifen mit einer schulterseitigen Profilrippe mit vier Querrillenreihen aus jeweils in Umfangsrichtung aufeinanderfolgenden Querrillen bekannt. Die zu zwei Querrillenreihen gehörenden Querrillen verlaufen jeweils im Rippeninnenabschnitt und im Rippenaußenabschnitt, enden vor der die schulterseitige Profilrippe begrenzenden Umfangsrille, weisen eine senkrecht zu ihrer Rillenmittellinie ermittelte maximale Breite von 2,5 mm bis 3,5 mm auf und setzen sich, in Draufsicht betrachtet, jeweils aus einem laufstreifeninnenseitigen Rillenabschnitt und einem laufstreifenaußenseitigen Rillenabschnitt zusammen, wobei die Rillenabschnitte - bezogen auf die Rillenmittellinie - miteinander einen stumpfen Winkel einschließen. Die Querrillen weisen jeweils zwei Rillenkanten auf, welche sich aus einem im laufstreifeninnenseitigen Rillenabschnitt befindlichen Kantenabschnitt und einem im laufstreifenaußenseitigen Rillenabschnitt befindlichen Kantenabschnitt zusammensetzen, und sind jeweils durch einen Rillengrund und zwei Rillenwände begrenzt. Jede Rillenwand weist eine einzige Schrägfläche auf, wobei die eine Schrägfläche vom im laufstreifeninnenseitigen Rillenabschnitt verlaufenden Kantenabschnitt der einen Rillenkante und die andere Schrägfläche vom im laufstreifenaußenseitigen Rillenabschnitt verlaufenden Kantenabschnitt der anderen Rillenkante ausgeht. Der durch die Rillenabschnitte geknickte Verlauf der Querrille sorgt für eine ausgewogene Gesamtsteifigkeit der Profilrippe, wodurch ein gleichmäßiges Abriebverhalten sowie ein gutes Brems- und Handlingverhalten erzielt wird. Die Fasen sind für die Brems- und Handlingeigenschaften auf trockener Fahrbahn günstig. Im Hinblick auf den Nassgriff soll vor allem die Neigung der Rillenabschnitte zur axialen Richtung von Bedeutung sein.

Die EP 3 388 256 A1 offenbart einen Fahrzeugluftreifen mit einer schulterseitigen Profilrippe mit im Rippeninnenabschnitt als auch im Rippenaußenabschnitt verlaufenden, vor der die schulterseitige Profilrippe begrenzenden Umfangsrille endenden Querrillen. Die Querrillen weisen jeweils einen innerhalb des Rippeninnenabschnitts verlaufenden Hauptabschnitt auf, wobei an zumindest einer Rillenwand eine zur Rillenkante verlaufende Schrägfläche ausgebildet ist. Die Querrille verläuft im Rippenaußenabschnitt unter kontinuierlicher Verringerung ihrer Tiefe als flächige Vertiefung aus, wobei die Vertiefung breiter ist als der Hauptabschnitt. Die Schrägfläche weist einen Flächenendabschnitt auf, welcher durch einen Kantenabschnitt der Rillenkante begrenzt ist, wobei der Kantenabschnitt zumindest eine die Querrille verbreiternde Knickstelle aufweist und wobei der Flächenendabschnitt entlang der flächigen Vertiefung ausläuft. Die Querrillen sorgen für eine Verringerung der Aquaplaninggefahr bei Kurvenfahrten.

Es ist üblich, schulterseitige Profilrippen von Laufstreifen mit Querrillen zu versehen, um die Entwässerung der Profilrippen zu ermöglichen. Schulterseitige Profilrippen mit laufstreifeninnenseitig innerhalb der Profilrippe endenden Querrillen weisen gegenüber schulterseitigen Profilrippen mit in die angrenzenden Umfangsrillen einmündenden Querrillen eine höhere Quer- und Umfangsteifigkeit auf, insbesondere im diesbezüglich kritischen, unmittelbar an die Umfangsrillen angrenzenden Profilrippenabschnitt, wodurch die Kraftübertragung auf den Untergrund verbessert wird, was für die Trockenperformance des Reifens günstig ist. Bei dem aus der DE 10 2019 206 654 A1 bekannten Reifen ist der an die Umfangsrille angrenzende Profilrippenabschnitt durch die verschachtelten Fasen in dieser Hinsicht bereits vorteilhaft ausgeführt, jedoch ist eine weitere Verbesserung im Hinblick auf Nässeperformance wünschenswert.

Der Erfindung liegt daher die Aufgabe zugrunde, bei einem Fahrzeugluftreifen der eingangs genannten Art die Nässeperformance unter Aufrechterhaltung einer guten Trockenperformance weiter zu verbessern.

Gelöst wird die gestellte Aufgabe erfindungsgemäß dadurch, dass in jeder Querrille innerhalb des Rippeninnenabschnitts zwei von Abschnitten der Rillenwände begrenzte Vorsprünge ausgebildet sind, wobei diese Abschnitte je eine der Schrägflächen, je eine Vorsprungflanke und je eine Endfläche sind, wobei die Schrägfläche den jeweiligen Vorsprung in radialer Richtung und die Endfläche den jeweiligen Vorsprung an seinem laufstreifenaußenseitigen Ende begrenzt,
wobei die Schrägflächen an am laufstreifeninnenseitigen Ende der Querrille zusammenlaufenden Wandabschnitten der Rillenwände auslaufen und wobei zwischen den Vorsprüngen eine laufstreifeninnenseitig über die Vorsprünge hinausverlaufende, von den zusammenlaufenden Wandabschnitten mitbegrenzte Rillenverengung der Querrille verbleibt, zu welcher jeder Vorsprung durch die Vorsprungflanke begrenzt ist.

Die Vorsprünge mit den Schrägflächen stabilisieren die Querrille und damit die Profilrippe und stellen derart die Aufrechterhaltung der Trockenperformance sicher.

Da sich die Vorsprünge und damit die Schrägflächen innerhalb des Rippeninnenabschnitts (d.h. innerhalb der Bodenaufstandsfläche) befinden und die Rillenwände der Querrillen jeweils eine einzige Schrägfläche aufweisen (Merkmal eines Reifens eingangs genannter Art) sind folglich die Rillenwände im Bereich des Rippenaußenabschnitts frei von Schrägflächen. Im Rippenaußenabschnitt sind an der Querrille an beiden Rillenwänden somit scharfe Rillenkanten ausgebildet, welche beim Fahren auf nasser Fahrbahn, bei entsprechenden Wassermengen, mit dem Untergrund in Kontakt treten und als "Nassgriffkanten" wirken. Die Rillenverengung verbessert - im Vergleich zu den aus der DE 10 2019 206 654 A1 bekannten ineinander verschachtelten Fasen (Schrägflächen) - die Entwässerung der Profilrippe, insbesondere im Bereich der Schrägflächen, und ermöglicht eine effizientere und verwirbelungsarme Wasserableitung über den seitlichen Rand der Bodenaufstandsfläche hinaus. Die erwähnten Nassgriffkanten und die Rillenverengung verbessern somit die Nässeperformance.

Gemäß einer bevorzugten Ausführung schließen die Vorsprungflanken über Vorsprungkanten an die Schrägflächen an, wobei die Rillenverengung, im in Umfangsrichtung ausgerichteten Querschnitt betrachtet, eine zwischen in radialer Richtung durch die Vorsprungkanten verlaufende Linien ermittelte Breite von 30% bis 75%, insbesondere von 40% bis 70%, der maximalen Breite der Querrille aufweist. Eine derart breit ausgeführte Rillenverengung ist für die Wasserableitung über den seitlichen Rand der Bodenaufstandsfläche und daher für die Nässeperformance von weiterem Vorteil.

Gemäß einer ersten Variante der letztgenannten bevorzugten Ausfürhung, welche für die Nässeperformance besonders günstig ist, beträgt die Breite der Rillenverengung 1,5 mm bis 3,5 mm.

Gemäß einer weiteren vorteilhaften Ausfürhung verlaufen die Vorsprungflanken, im in Draufsicht in Umfangsrichtung ausgerichteten Querschnitt betrachtet, zur radialen Richtung jeweils unter einem Winkel von 0° bis 8°, insbesondere von 2° bis 6°. Vorsprünge mit solchen Vorsprungflanken sind für die Nässeperformance vorteilhaft, weil die zwischen ihnen verlaufende Rillenverengung eine hohe Querschnittsfläche aufweist.

Gemäß einer weiteren Variante verläuft die Vorsprungkante in einer in radialer Richtung ermittelten Tiefe, welche in Richtung Laufstreifeninnenseite kontinuierlich zunimmt, wobei die Tiefe am laufstreifeninnenseitigen Ende der Vorsprungkante einen ersten Wert von vorzugsweise 1,4 mm bis 4,0 mm, besonders bevorzugt von bis zu 3,0 mm, und am laufstreifenaußenseitigen Ende der Vorsprungkante einen zweiten Wert von vorzugsweise 40% bis 65%, besonders bevorzugt von 50% bis 60%, des ersten Wertes aufweist. Auf den technischen Effekt dieser Variante wird anschließend noch eingegangen.

Gemäß einer vierten Variante weisen die Schrägflächen, im in Draufsicht in Umfangsrichtung ausgerichteten Querschnitt betrachtet, über die Erstreckung der Vorsprungkante eine Breite auf, welche in Richtung Laufstreifeninnenseite kontinuierlich zunimmt.

Die dritte und vierte Variante zeichnet sich somit durch eine in Richtung Laufstreifeninnenseite zunehmende Tiefen- und Breitenerstreckung der Schrägfläche aus. Diese Varianten sind zur Aufrechterhaltung einer guten Trockenperformance günstig, weil unter Traktions- und Bremsbelastung die weiter laufstreifeninnenseitig liegenden Abschnitte der Schrägfläche stärker beansprucht werden. Die in Richtung Laufstreifenaußenseite abnehmende Tiefen- und Breitenerstreckung gleicht die in dieser Richtung abnehmende Tiefe der Querrille etwas aus, was zur Aufrechterhaltung einer guten Nässeperformance beiträgt. Die dritte und vierte Variante stellen einen besonders vorteilhaften Kompromiss zwischen einer guten Nässeperformance und einer guten Trockenperformance sicher.

Gemäß einer weiteren bevorzugten Ausführung schließen die zusammenlaufenden Wandabschnitte der Rillenwände an einen Grundabschnitt des Rillengrundes an, welcher, im Längsschnitt durch die Querrille betrachtet, an seinem laufstreifeninnenseitigen Ende in radialer Richtung in einer Tiefe von 1,0 mm bis 3,0 mm endet. Der erwähnte Grundabschnitt führt zu einer seichten Ausführung der Querrille an ihrem laufstreifeninnenseitigen Ende, was zu einer hohen Quer- und Umfangsteifigkeit im unmittelbar an die Umfangsrille angrenzenden Profilrippenabschnitt beiträgt, wodurch die Kraftübertragung auf den Untergrund verbessert ist. Diese Ausführung trägt daher zur Aufrechterhaltung einer guten Trockenperformance bei.

Eine vorteilhafte Variante der letztgenannten bevorzugten Ausführung besteht darin, dass der Grundabschnitt, an welchem die zusammenlaufenden Wandabschnitte anschließen, im durch die Querrille verlaufenden Längsschnitt betrachtet, zur radialen Richtung unter einem konstanten Winkel von 50° bis 75°, insbesondere von 60° bis 70°, verläuft. Der derart geneigte Grundabschnitt begünstigt die Wasserableitung in Richtung Laufstreifenaußenseite und trägt somit zur weiteren Verbesserung der Nässeperformance bei.

Gemäß einer weiteren bevorzugten Ausführung setzen sich die Querrillen, in Draufsicht betrachtet, jeweils aus einem teilweise im Rippeninnenabschnitt und teilweise im Rippenaußenabschnitt verlaufenden Rillenhauptabschnitt und einem ausschließlich im Rippeninnenabschnitt ausgebildeten Rillenendabschnitt zusammen, wobei sich zumindest eine Rillenkante aus einem über den Rillenhauptabschnitt reichenden Kantenhauptabschnitt und einem über den Rillenendabschnitt reichenden Kantenendabschnitt zusammensetzt, wobei die Kantenabschnitte an einer Knickstelle der Rillenkante aneinander anschließen und miteinander einen Winkel von 150° bis 165° einschließen, wobei die Querrille an der Knickstelle ihre maximale Breite aufweist und ausgehend von dieser Stelle die Breite der Querrille zu ihren Enden kontinuierlich abnimmt, wobei die Vorsprünge und die Rillenverengung sowohl im Rillenhauptabschnitt als auch im Rillenendabschnitt verlaufen und wobei vom Kantenendabschnitt der eine der beiden zusammenlaufenden Wandabschnitte, an welchem die eine Schrägfläche ausläuft, ausgeht, sodass die Schrägfläche einen an den Wandabschnitt anschließenden Flächenauslauf aufweist.

Durch diese spezielle Ausgestaltung weist die Querrille einen in Richtung Laufstreifeninnenseite deutlich schmäler werdender Rillenendabschnitt auf, welcher eine für die Trockenperformance vorteilhaft hohe Steifigkeit im in die Umfangsrille angrenzenden Profilrippenabschnitt sicherstellt.

Im Anschluss wird auf bevorzugte, miteinander kombinierbare Varianten der letztgenannten bevorzugten Ausführung eingegangen.

Eine erste bevorzugte Variante besteht darin, dass der Rillenhauptabschnitt eine innerhalb des Rippeninnenabschnitts an der Rippenaußenfläche ermittelte, in axialer Richtung projizierte Länge von 55% bis 80% der innerhalb des Rippeninnenabschnitts an der Rippenaußenfläche ermittelten, in axialer Richtung projizierten Länge der Querrille aufweist. Dies ist vor allem für die Nässeperformance von Vorteil.

Eine zweite bevorzugte Variante besteht darin, dass Querrillen vorgesehen sind, bei welchen sich der Kantenendabschnitt der einen Rillenkante, in Draufsicht betrachtet, aus einem gerade verlaufenden, laufstreifenaußenseitigen Kantenunterabschnitt und einem bogenförmig verlaufenden, laufstreifeninnenseitigen Kantenunterabschnitt zusammensetzt, wobei die Schrägfläche an einem vom laufstreifenaußenseitigen Kantenunterabschnitt ausgehenden Wandabschnittsbereich des Wandabschnitts endet und wobei der laufstreifeninnenseitige Kantenunterabschnitt eine an der Rippenaußenfläche ermittelte, in axialer Richtung projizierte Länge von vorzugsweise 20% bis 26% der an der Rippenaußenfläche ermittelten, in axialer Richtung projizierte Länge des Rillenendabschnitts aufweist.

Eine dritte bevorzugte Variante besteht darin, dass Querrillen vorgesehen sind, bei welchen der Kantenendabschnitt der einen Rillenkante, in Draufsicht betrachtet, gerade verläuft.

Eine vierte bevorzugte Variante besteht darin, dass Querrillen vorgesehen sind, bei welchen die zweite Rillenkante durchgehend gebogen verläuft, wobei die von dieser Rillenkante ausgehende, den Vorsprung in radialer Richtung begrenzende Schrägfläche an einem den Vorsprung mitbegrenzenden, zum Rillengrund verlaufenden Wandabschnittsbereich des Wandabschnitts ausläuft, sodass die Schrägfläche einen an den Wandabschnittsbereich anschließenden Flächenauslauf aufweist.

Eine fünfte bevorzugte Variante sieht vor, dass Querrillen vorgesehen sind, bei welchen sich die zweite Rillenkante aus einem über den Rillenhauptabschnitt reichenden Kantenhauptabschnitt und einem über den Rillenendabschnitt reichenden Kantenendabschnitt zusammensetzt, wobei die Kantenabschnitte einen Winkel von 140° bis 150° einschließen, wobei vom Kantenendabschnitt der andere der beiden zusammenlaufenden Wandabschnitte, an welchem die andere Schrägfläche ausläuft, ausgeht.

Gemäß einer weiteren bevorzugten Ausführung weisen die Schrägflächen an der Rippenaußenfläche eine in die axiale Richtung projizierte Länge von 40% bis 70%, insbesondere von 45% bis 65%, der in die axiale Richtung projizierten Länge der Querrille auf. Da die Schrägflächen die Vorsprünge in radialer Richtung begrenzen, definiert die Länge der Schrägflächen auch die Länge der Vorsprünge. Schrägflächen dieser Länge sind für die Trockenperformance von Vorteil. Gleichzeitig sind die Vorsprünge in ihrer Länge derart begrenzt, dass die Querrille über ein vorteilhaft hohes Wasseraufnahmevermögen verfügt.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine vereinfachte Draufsicht auf einen Umfangsabschnitt einer schulterseitigen Profilrippe eines in die Ebene abgewickelten Laufstreifens eines Fahrzeugluftreifens mit einer Ausführungsvariante der Erfindung,
Fig. 2 einen Schnitt entlang der Linie II-II der Fig. 1,
Fig. 3 eine vergrößerte Draufsicht auf das Detail Z₃ der Fig. 1,
Fig. 4 einen Schnitt entlang der Linie IV-IV der Fig. 3,
Fig. 5 einen Schnitt entlang der Linie V-V der Fig. 3,
Fig. 6 einen Schnitt entlang der Linie VI-VI der Fig. 3,
Fig. 7 einen Schnitt entlang der Linie VII-VII der Fig. 3,
Fig. 8 eine Ansicht gemäß der in Fig. 3 durch den Pfeil S₈ angedeuteten Sichtrichtung,
Fig. 9 eine Ansicht gemäß der in Fig. 3 durch den Pfeil S₉ angedeuteten Sichtrichtung,
Fig. 10 eine Ansicht gemäß der in Fig. 3 durch den Pfeil S₁₀ angedeuteten Sichtrichtung,
Fig. 11 eine Ansicht gemäß der in Fig. 3 durch den Pfeil S₁₁ angedeuteten Sichtrichtung, wobei die schulterseitige Profilrippe aufgeschnitten ist,
Fig. 12 eine Ansicht gemäß der in Fig. 3 durch den Pfeil S₁₂ angedeuteten Sichtrichtung, wobei die schulterseitige Profilrippe aufgeschnitten ist,
Fig. 13 eine Ansicht gemäß der in Fig. 3 durch den Pfeil S₁₃ angedeuteten Sichtrichtung und
Fig. 14 einen Schnitt entlang der Linie XIV-XIV der Fig. 3.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (Kleintransporter mit zGM ≤ 3,5 t, Leichte LKWs mit zGM ≤ 7,5 t).

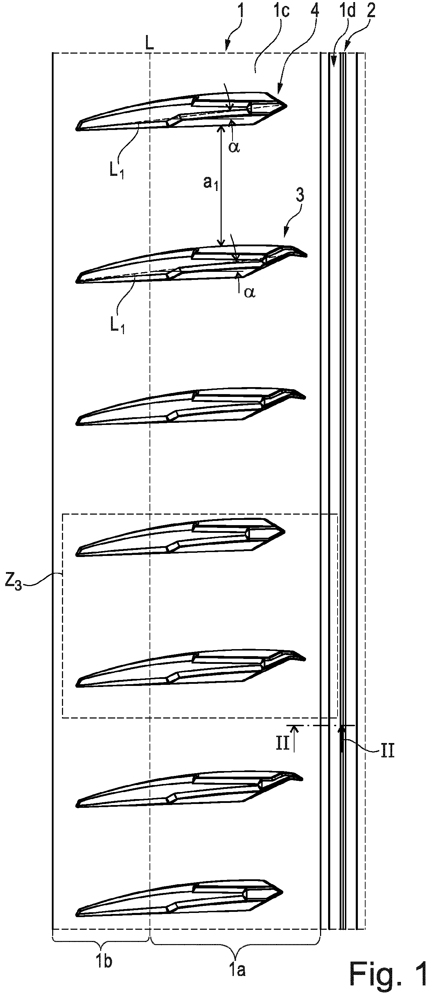

Fig. 1 zeigt eine Draufsicht auf einen Umfangsabschnitt einer schulterseitigen Profilrippe 1 eines Laufstreifens eines Fahrzeugluftreifens. Die schulterseitige Profilrippe 1 ist laufstreifeninnenseitig von einer beim gezeigten Ausführungsbeispiel in Draufsicht gerade verlaufenden schulterseitigen Umfangsrille 2 begrenzt. Der seitliche Rand des bodenberührenden Teils des Laufstreifens ist in Fig. 1 durch eine gestrichelte Linie L gekennzeichnet, wobei der bodenberührende Teil des Laufstreifens dem statisch ermittelten Footprint gemäß E.T.R.T.O.-Standards entspricht (Last bei 70 % der maximalen Tragfähigkeit bei einem Innendruck von 85 % nach E.T.R.T.O.-Norm).

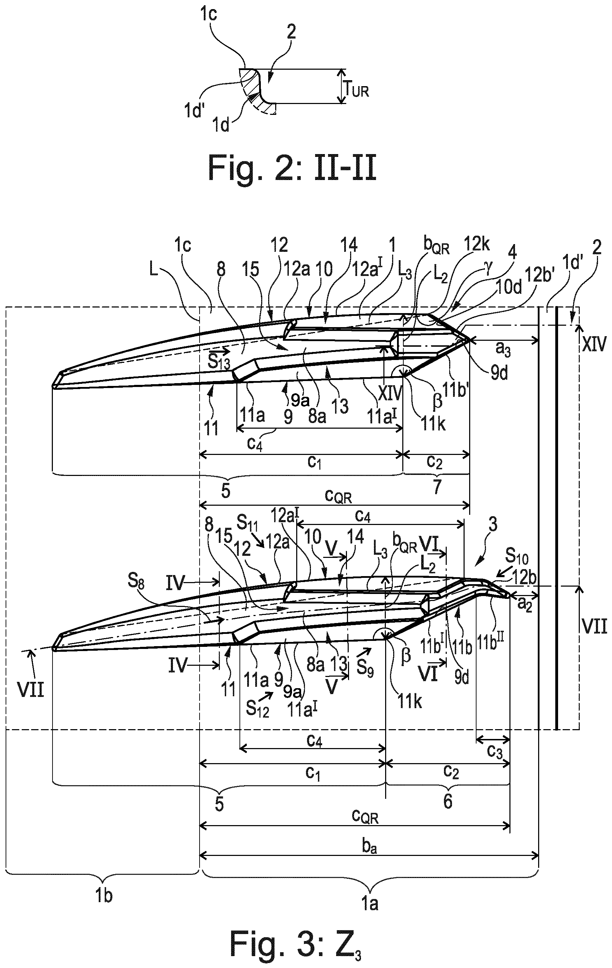

Die schulterseitige Umfangsrille 2 ist in radialer Richtung auf die jeweils vorgesehene Profiltiefe T_{UR} (Fig. 2) ausgeführt, welche für den bevorzugten Reifentyp üblicherweise 6,5 mm bis 13,0 mm, insbesondere bis zu 10,0 mm, beträgt.

Die schulterseitige Profilrippe 1 weist eine in der Laufstreifenperipherie liegende Rippenaußenfläche 1c, einen innerhalb der Bodenaufstandsfläche verlaufenden Rippeninnenabschnitt 1a mit einer am Niveau der Rippenaußenfläche 1c in axialer Richtung ermittelten Breite bₐ (Fig. 3) und einen außerhalb der Bodenaufstandsfläche verlaufenden Rippenaußenabschnitt 1b auf und ist zur schulterseitigen Umfangsrille 2 durch eine Rippenflanke 1d begrenzt. Gemäß Fig. 2 weist die Rippenflanke 1d beim gezeigten Ausführungsbeispiel eine Übergangsrundung 1d' auf, welche, im in Draufsicht in axialer Richtung ausgerichteten Querschnitt betrachtet (vergl. Lage der Linie II-II in Fig. 1), knickfrei in die Rippenaußenfläche 1c übergeht.

Gemäß Fig. 1 ist die schulterseitige Profilrippe 1 über ihre Umfangserstreckung mit einer Vielzahl von Querrillen 3, 4 versehen, wobei in Umfangsrichtung zwei Querrillen 3 abwechselnd auf eine Querrille 4 folgen. Die Querrillen 3, 4 verleihen der schulterseitigen Profilrippe 1 eine blockartige Struktur und verlaufen - in Draufsicht betrachtet und bezogen auf entlang der größten Rillenlänge ausgerichtete, gerade verlaufende Linien L₁ - vorzugsweise parallel zueinander sowie zur axialen Richtung unter einem Winkel α von 0° bis 20°, insbesondere von bis zu 7°. Der Winkel α der Querrillen 3 kann vom Winkel α der Querrillen 4 um insbesondere bis zu 3° abweichen, sodass - bezogen auf die Linien L₁ - die Querrillen 3 nicht parallel zu den Querrillen 4 verlaufen. In Umfangsrichtung unmittelbar aufeinanderfolgende Querrillen 3, 4 weisen voneinander an der Rippenaußenfläche 1c in Umfangsrichtung als kleinstmögliche Abstände ermittelte Abstände a₁ von vorzugsweise 15,0 mm von 35,0 mm auf.

Die weitere Ausgestaltung der Querrillen 3, 4 wird nachfolgend anhand von einzelnen Querrillen 3, 4 beschrieben.

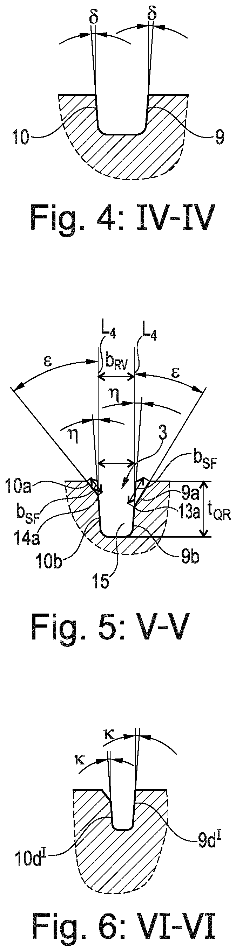

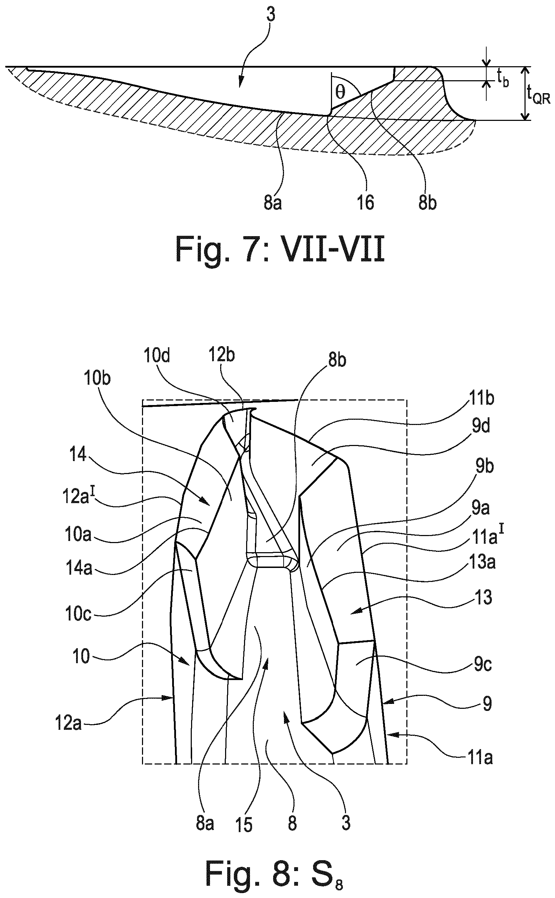

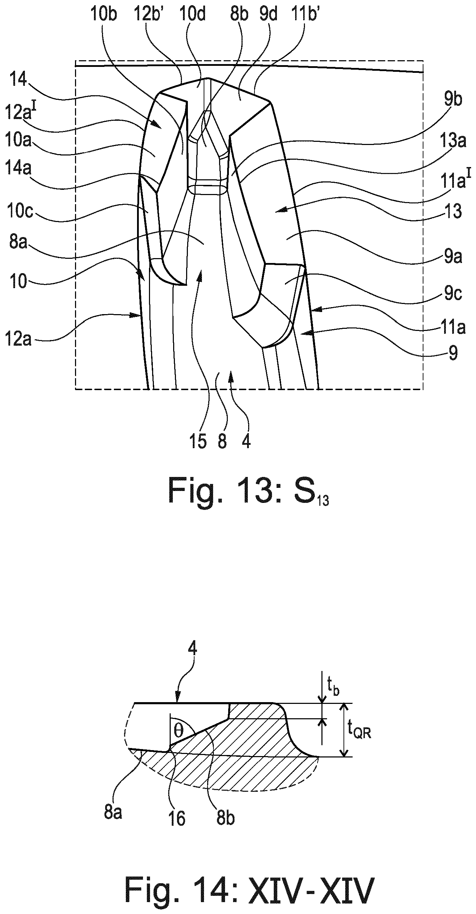

Gemäß Fig. 3 endet die Querrille 3, 4 vor der schulterseitigen Umfangsrille 2, beim Ausführungsbeispiel somit vor dem radial äußeren Ende der Übergangsrundung 1d' (vergl. Fig. 2), in einem an der Rippenaußenfläche 1c in axialer Richtung ermittelten Abstand a₂ (Querrille 3), a₃ (Querrille 4) von 4,0 mm von 15,0 mm, wobei der Abstand a₃ beim Ausführungsbeispiel größer ist als der Abstand a₂. Die Querrille 3, 4 weist eine im Rippeninnenabschnitt 1a an der Rippenaußenfläche 1c ermittelte, in die axiale Richtung projizierte Länge c_{QR}, in radialer Richtung jeweils eine maximale Tiefe t_{QR} (Tiefe an der tiefsten Stelle, Fig. 5 und Fig. 7: Querrille 3, Fig. 14: Querrille 4) von 5,0 mm bis 9,0 mm auf und wird in bekannter Weise zu ihrem laufstreifenaußenseitigen Ende kontinuierlich seichter (Fig. 7: Querrille 3).

Die Querrille 3, 4 setzt sich, in Draufsicht und in axialer Richtung betrachtet, aus einem im Rippeninnenabschnitt 1a und im Rippenaußenabschnitt 1b verlaufenden Rillenhauptabschnitt 5 und einem ausschließlich im Rippeninnenabschnitt 1a ausgebildeten Rillenendabschnitt 6 (Querrille 3), 7 (Querrille 4) zusammen. Die Querrille 3, 4 ist durch einen Rillengrund 8, eine Rillenwand 9 und eine Rillenwand 10 begrenzt, wobei die Rillenwand 9 von einer an der Rippenaußenfläche 1c liegenden Rillenkante 11 und die Rillenwand 10 von einer an der Rippenaußenfläche 1c liegenden Rillenkante 12 ausgeht. Die Orientierung der Querrillen 3, 4 ist derart, dass in Umfangsrichtung je eine Rillenkante 11 abwechselnd auf eine Rillenkante 12 folgt.

Die Rillenkante 11 setzt sich, in Draufsicht betrachtet, aus einem über den Rillenhauptabschnitt 5 reichenden, gerade verlaufenden Kantenhauptabschnitt 11a und einem über den Rillenendabschnitt 6, 7 reichenden Kantenendabschnitt 11b (Querrille 3) bzw. 11b' (Querrille 4) zusammen und weist am gegenseitigen Anschlussbereich der Kantenabschnitte 11a, 11b bzw. 11a, 11b' eine Knickstelle 11k auf, an welcher die Kantenabschnitte 11a, 11b bzw. 11a, 11b' miteinander einen in Draufsicht über den Bereich der Querrille 3, 4 gemessenen Winkel β von 150° bis 165° einschließen. Die "Teilung" der Querrille 3, 4 in den Rillenhauptabschnitt 5 und den Rillenendabschnitt 6 bzw. 7 erfolgt entlang einer in Draufsicht in Umfangsrichtung durch die Knickstelle 10k verlaufenden Linie L₂. Der Rillenhauptabschnitt 5 weist innerhalb der Bodenaufstandsfläche eine an der Rippenaußenfläche 1c ermittelte, in axialer Richtung projizierte Länge c₁ von 55% bis 80% der erwähnten Länge c_{QR} der zugehörigen Querrille 3, 4 und der Rillenendabschnitt 6 bzw. 7 weist eine an der Rippenaußenfläche 1c ermittelte, in axialer Richtung projizierte Länge c₂ auf, wobei sich die Länge c₂ aus der jeweiligen Länge c₁ und dem Abstand a₂ (Querrille 3), a₃ (Querrille 4) ergibt. Die Länge c₁ des Rillenhauptabschnitts 5 der Querrille 3 beträgt vorzugsweise 55% bis 65% der Länge c_{QR} der Querrille 3. Die Länge c₁ des Rillenhauptabschnitts 5 der Querrille 4 beträgt vorzugsweise 70% bis 80% der Länge c_{QR} der Querrille 4.

Der Kantenendabschnitt 11b (Rillenkante 11 der Querrille 3) setzt sich, in Draufsicht betrachtet, aus einem gerade verlaufenden, laufstreifenaußenseitigen Kantenunterabschnitt 11b^{I} und einem zumindest abschnittsweise bogenförmig verlaufenden, laufstreifeninnenseitigen Kantenunterabschnitt 11b^{II} zusammen. Der laufstreifeninnenseitige Kantenunterabschnitt 11b^{II} weist eine an der Rippenaußenfläche 1c ermittelte, in axialer Richtung projizierte Länge c₃ von 20% bis 26% der Länge c₂ auf, wobei die Länge c₃ bevorzugt mindestens 3,0 mm beträgt.

Der Kantenendabschnitt 11b' (Rillenkante 11 der Querrille 4) verläuft in Draufsicht gerade.

Die Rillenkante 12 läuft laufstreifeninnenseitig mit der Rillenkante 11 zusammen und setzt sich, in Draufsicht betrachtet, aus einem über den Rillenhauptabschnitt 5 verlaufenden und in den Rillenendabschnitt 6, 7 hineinverlaufenden Kantenhauptabschnitt 12a und einem ausschließlich im Rillenendabschnitt 6, 7 verlaufenden Kantenendabschnitt 12b (Querrille 3), 12b' (Querrille 4) zusammen. Der Kantenhauptabschnitt 12a verläuft in Draufsicht derart leicht gebogen, dass eine die Enden des Kantenhauptabschnitts 12a verbindende, gerade Linie L₃ innerhalb der Querrille 3, 4 liegt.

Bei der Querrille 3 verläuft der Kantenendabschnitt 12b in Draufsicht bogenförmig, wobei dessen Krümmungsrichtung mit jener des Kantenhauptabschnitts 12a übereinstimmt und wobei der Kantenendabschnitt 12b tangential (knickpunktfrei) an den Kantenhauptabschnitt 12a anschließt. Bei der Querrille 3 verläuft die Rillenkante 12 somit auf wendepunktfreie Weise durchgehend gebogen (bogenförmig).

Bei der Querrille 4 verläuft der Kantenendabschnitt 12b' in Draufsicht gerade, schließt über eine Knickstelle 12k der Rillenkante 12 an den Kantenhauptabschnitt 12a an, wobei der Kantenhauptabschnitt 12a mit dem Kantendendabschnitt 12b' einen in Draufsicht über den Bereich der Querrille 4 gemessenen Winkel γ von 140° bis 150° einschließt. Der Winkel γ ist bezüglich einer nicht gezeigten, in Draufsicht an den Kantenhauptabschnitt 12a angelegten, durch die Knickstelle 12k verlaufenden Tangente ermittelt.

Die Querrille 3, 4 weist an der Knickstelle 11k, 12k zwischen den Rillenkanten 11, 12 ihre in Umfangsrichtung ermittelte maximale Breite b_{QR} (Breite an der breitesten Stelle) von 3,0 mm bis 8,0 mm, insbesondere von 4,0 mm bis 7,0 mm, auf. Ausgehend von der Stelle mit der maximalen Breite b_{QR} nimmt die Breite der Querrille 3, 4 zu ihren Enden kontinuierlich ab.

Wie Fig. 3 in Kombination mit Fig. 8 und Fig. 13 zeigt, ist im Bereich des Rippeninnenabschnitts 1a in der Querrille 3, 4 ein in Draufsicht (Fig. 3) in Erstreckungsrichtung der Querrille 3, 4 langgestreckter, flacher Vorsprung 13, welcher von der Rillenwand 9 mitbegrenzt ist, und ein in Draufsicht (Fig. 3) in Erstreckungsrichtung der Querrille 3, 4 langgestreckter, flacher Vorsprung 14, welcher von der Rillenwand 10 mitbegrenzt ist, ausgebildet, wobei die Vorsprünge 13, 14 am Rillengrund 8 aufsitzen. Gemäß Fig. 3 befinden sich die Vorsprünge 13, 14 ausschließlich im Bereich des Rippeninnenabschnitts 1a, wobei die Vorsprünge 13, 14 teilweise im Rillenhauptabschnitt 5 und teilweise im Rillenendabschnitt 6 bzw. 7 verlaufen. Wie Fig. 8 und Fig. 13 zeigen, weist die Querrille 3, 4 eine durch die Vorsprüngen 13, 14 gebildete, zwischen diesen verlaufende Rillenverengung 15 auf, welche gemäß Fig. 3 laufstreifeninnenseitig über die Enden der Vorsprünge 13, 14 hinausverläuft und über den gesamten Rillenendabschnitt 6, 7 sowie bis zu dessen laufstreifeninnenseitigen Ende reicht.

Gemäß Fig. 4 verlaufen die Rillenwände 9, 10 im Bereich außerhalb der Vorsprünge 13, 14, im in Draufsicht in Umfangsrichtung ausgerichteten Querschnitt betrachtet (vergl. Lage der Linie IV-IV in Fig. 3), zur radialen Richtung jeweils unter einem Winkel δ von 0° bis 8°, insbesondere von mindestens 2°.

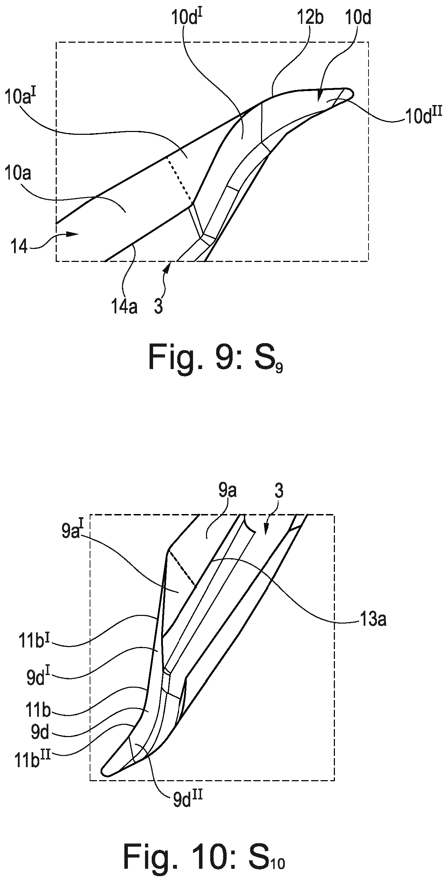

Gemäß Fig. 8 und Fig. 13 ist der Vorsprung 13 von Abschnitten der Rillenwand 9 und der Vorsprung 14 von Abschnitten der Rillenwand 10 begrenzt. Zu den die Vorsprünge 13, 14 begrenzenden Abschnitten gehören eine den Vorsprung 13, 14 in radialer Richtung begrenzende, fasenartige Schrägfläche 9a (Vorsprung 13), 10a (Vorsprung 14), eine den Vorsprung 13, 14 zur Rillenverengung 15 begrenzende Vorsprungflanke 9b (Vorsprung 13), 10b (Vorsprung 14) und eine den Vorsprung 13, 14 an seinem laufstreifenaußenseitigen Ende begrenzende Endfläche 9c (Vorsprung 13), 10c (Vorsprung 14). Die Rillenverengung 15 ist durch Grundabschnitte 8a, 8b des Rillengrundes 8, die Vorsprungflanken 9b, 10b und endseitige Wandabschnitte 9d, 10d (Fig. 10: Wandabschnitt 9d der Querrille 3) der Rillenwänden 9, 10 begrenzt.

Der Grundabschnitt 8a verläuft zwischen den Vorsprungflanken 9b, 10b sowie auf der Tiefe t_{QR} der Querrille 3, 4 (vergl. Fig. 7: Querrille 3), wobei der Grundabschnitt 8a gemäß Fig. 3 bei der Querrille 3 in den Rillenendabschnitt 6 hineinverläuft und bei der Querrille 4 im Rillenhauptabschnitt 5 endet. Gemäß Fig. 7 und Fig. 14 schließt der Grundabschnitt 8b über eine optional vorgesehene Übergangrundung 16 mit einem Radius von bis zu 1,0 mm an das laufstreifeninnenseitige Ende des Grundabschnitts 8a an, ist rampenförmig ausgeführt und verläuft, betrachtet im durch die Querrille 3, 4 verlaufenden Längsschnitt (vergl. Lage der Linie VII-VII und XIV-XIV in Fig. 3), zur radialen Richtung unter einem konstanten Winkel θ von 50° bis 75°, insbesondere von 60° bis 70°, und endet laufstreifeninnenseitig in einer Tiefe t_{b} von 1,0 mm bis 3,0 mm.

Gemäß Fig. 5 verlaufen die Vorsprungflanken 9b, 10b, im in Draufsicht in Umfangsrichtung ausgerichteten Querschnitt betrachtet, zur radialen Richtung jeweils unter einem Winkel η von 0° bis 8°, insbesondere von 2° bis 6°.

Gemäß Fig. 8 und Fig. 13 geht der endseitige Wandabschnitt 9d vom Kantenendabschnitt 11b (Fig. 8, Fig. 10: Querrille 3), 11b', (Fig 13: Querrille 4) aus und der endseitige Wandabschnitt 10d geht vom Kantenendabschnitt 12b (Fig. 9: Querrille 3), 12b' (Fig. 13: Querrille 4) aus.

Gemäß Fig. 10 ist der endseitige Wandabschnitt 9d bei der Querrille 3 aus einem an den laufstreifenaußenseitigen Kantenunterabschnitt 11b^{I} anschließenden, ebenen Wandabschnittsbereich 9d^{I} und einem an den laufstreifeninnenseitigen Kantenunterabschnitt 11b^{II} anschließenden in Draufsicht zumindest abschnittsweise bogenförmig verlaufenden Wandabschnittsbereich 9d^{II} gebildet. Gemäß Fig. 9 ist der endseitige Wandabschnitt 10d bei der Querrille 3 in Draufsicht durchgehend bogenförmig gekrümmt und setzt sich aus einem an den Kantenendabschnitt 12b anschließenden Wandabschnittsbereich 10d^{II} und einem am Vorsprung 14 ausgebildeten Wandabschnittsbereich 10d^{I} zusammen. Die Wandabschnittsbereiche 9d^{I}, 9d^{II}, 10d^{I}, 10d^{II}, verlaufen, im in Umfangsrichtung ausgerichteten Querschnitt betrachtet, zur radialen Richtung jeweils unter Winkel κ von bis zu 6° verlaufen (Fig. 6: gezeigt für Wandabschnittsbereich 9d^{I}, 10d^{I}).

Gemäß Fig. 13 sind die endseitigen Wandabschnitte 9d, 10d bei der Querrille 4 ebene Flächen, welche unter einem in Draufsicht spitzen Winkel zusammenlaufen (vergl. Fig. 3).

Wie Fig. 8 und Fig. 13 ferner zeigen, geht die Schrägfläche 9a von einem unmittelbar an den Kantenendabschnitt 11b (Fig. 8: Querrille 3), 11b' (Fig. 13: Querrille 4) anschließenden innenseitigen Abschnittteil 11a^{I} des Kantenhauptabschnitts 11a aus (vergl. Fig. 3). Die Schrägfläche 10a geht von einem unmittelbar an den Kantenendabschnitt 12b (Fig. 8: Querrille 3), 12b' (Fig. 13: Querrille 4) anschließenden, innenseitigen Abschnittteil 12a^{I} des Kantenhauptabschnitts 12a aus. (vergl. Fig. 3). Der innenseitige Abschnittteil 11a^{I}, 12a^{I} weist eine in die axiale Richtung projizierte Länge c₄ von 40% bis 70%, insbesondere von 45% bis 65%, der Länge c_{QR} (Fig. 3) der Querrille 3, 4 auf. Die Länge c₄ ist daher die Länge der Schrägfläche 9a, 10a an der Rippenaußenfläche 1c.

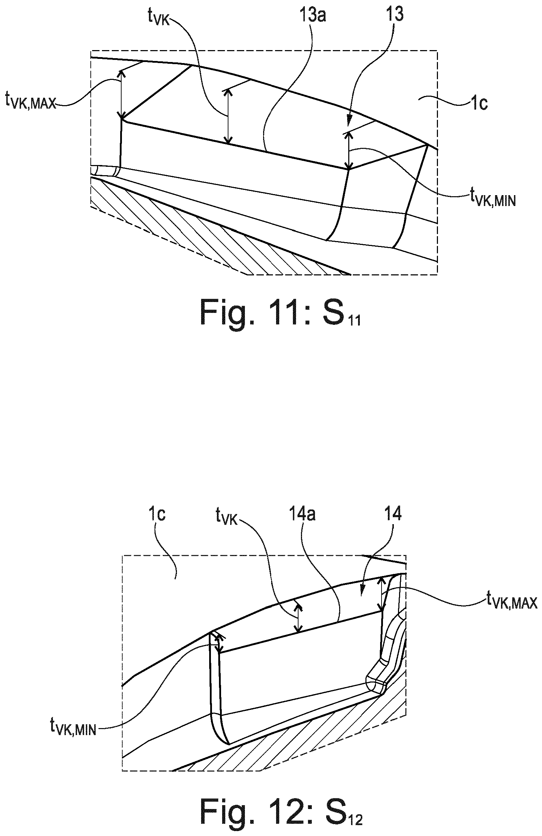

Die Schrägfläche 9a, 10a schließt an die jeweilige Vorsprungflanke 9b, 10b über eine gerade oder leicht bogenförmig verlaufende scharfe Vorsprungkante 13a, 14a (vergl. Fig. 11, Fig. 12) an. Gemäß Fig. 5 erscheint die Schrägfläche 9a, 10a, im in Umfangsrichtung ausgerichteten Querschnitt betrachtet (vergl. Lage der Linie V-V in Fig. 3), als gerade Linie, welche zur radialen Richtung unter Winkel ε von 20° bis 55°, insbesondere von 25° bis 40°, verläuft. Der Winkel ε ist über die Erstreckung der Schrägfläche 9a, 10a vorzugsweise konstant, sodass die Schrägfläche 9a, 10a eine ebene oder bedingt durch die Reifenkrümmung zumindest abschnittsweise leicht gekrümmte Fläche ist. Alternativ kann der Winkel ε über die Erstreckung der Schrägfläche 9a, 10a kontinuierlich um bis zu 2° variieren, sodass sich die Schrägfläche 9a, 10a über ihre Erstreckung leicht verdreht.

Gemäß Fig. 11 und Fig. 12 verläuft die Vorsprungkante 13a, 14a in einer gegenüber dem Niveau der Rippenaußenfläche 1c in radialer Richtung ermittelten Tiefe t_{VK}, welche in Richtung Laufstreifeninnenseite kontinuierlich zunimmt. Die Tiefe t_{VK} weist am laufstreifeninnenseitigen Ende der Vorsprungkante 13a, 14a einen Wert t_{VK,MAX} und am laufstreifenaußenseitigen Ende der Vorsprungkante 13a, 14a einen Wert t_{VK,MIN} auf. Der Wert t_{VK,MAX} beträgt 1,4 mm bis 4,0 mm, insbesondere bis zu 3,0 mm, und der Wert t_{VK,MIN} beträgt 40% bis 65%, insbesondere 50% bis 60%, des Wertes t_{VK,MAX}.

Die Schrägflächen 9a , 10a weisen, im in Draufsicht in Umfangsrichtung ausgerichteten Querschnitt betrachtet, über die Erstreckung der Vorsprungkante 13a, 14a eine Breite b_{SF} (Fig. 5) auf, welche gemeinsam mit der zur Vorsprungkante 13a, 14a gehörenden Tiefe t_{VK} in Richtung Laufstreifeninnenseite kontinuierliche zunimmt. Die Größe der Breite b_{SF} ergibt sich aus der Auslegung der Tiefe t_{VK}, also dem Tiefenverlauf der Vorsprungkante 13a, 14a und dem Winkel ε (Fig. 5) der Schrägflächen 9a, 10a. Wie Fig. 8 und Fig. 13, insbesondere jeweils in Kombination mit Fig. 3, zeigen, läuft die Schrägfläche 9a entlang des Wandabschnitts 9d (Fig. 10: bei der Querrille 3 am Wandabschnittsbereich 9d^{I} des Wandabschnitts 9d) aus, sodass die Schrägfläche 9a einen an den Wandabschnitt 9d anschließenden dreieckigen Flächenauslauf 9a^{I} (Fig. 10, angedeutet durch punktierte Linie) die Vorsprungkante 13a am Wandabschnitt 9d (Fig. 10: bei der Querrille 3 am Wandabschnittsbereich 9d^{I}) endet. Gemäß Fig. 9 läuft die Schrägfläche 10a, welche einen in der Querrille 3 ausgebildeten Vorsprung 14 mitbegrenzt, an dem den Vorsprung 14 mitbegrenzenden Wandabschnittsbereich 10d^{I} aus, sodass die Schrägfläche 10a einen an den Wandabschnittsbereich 10d^{I} anschließenden Flächenauslauf 10a^{I} aufweist und die Vorsprungkante 14a am Wandabschnittsbereich 10d^{I} bzw. am Flächenauslauf 10a^{I} endet. Gemäß Fig. 13 läuft die Schrägfläche 10a, welche einen in einer Querrille 4 ausgebildeten Vorsprung 14 mitbegrenzt, entlang des Wandabschnitts 10d aus.

Gemäß Fig. 5 weist die Rillenverengung 15, im in Draufsicht in Umfangsrichtung ausgerichteten Querschnitt betrachtet, eine Breite b_{RV} auf, welche zwischen zwei in radialer Richtung durch die Vorsprungkanten 13a, 14a verlaufenden Linien L₄, ermittelt ist. Die Ausgestaltung der Vorsprünge 13, 14 ist derart, dass die Breite b_{RV} 30% bis 75%, insbesondere 40% bis 70%, der maximalen Breite b_{QR} (Fig. 3) der zugehörigen Querrille 3, 4 beträgt, wobei die Breite b_{RV} in Richtung Laufstreifeninnenseite vorzugsweise kontinuierlich abnimmt. Die Breite b_{RV} der Rillenverengung 15 und die maximalen Breite b_{QR} der Querrille 3, 4 sind vorzugsweise derart aufeinander abgestimmt, dass die Breite b_{RV} 1,5 mm bis 3,5 mm beträgt.

Die Erfindung ist auf das beschriebene Ausführungsbeispiel nicht beschränkt: Die beide Rillenkanten der Querrillen können frei von Knickstellen
sein, sodass die Querrillen keine wie im Zusammenhang mit dem Ausführungsbeispiel beschriebene Rillenabschnitte aufweisen. In der anderen Laufstreifenhälfte kann eine weitere schulterseitige Profilrippe mit erfindungsgemäß ausgeführten Querrillen vorgesehen sein.

### Bezugszeichenliste

- 1: schulterseitige Profilrippe
- 1a: Rippeninnenabschnitt
- 1b: Rippenaußenabschnitt
- 1c: Rippenaußenfläche
- 1d: Rippenflanke
- 1d': Übergangsrundung
- 2: schulterseitige Umfangsrille
- 3: Querrille
- 4: Querrille
- 5: Rillenhauptabschnitt
- 6: Rillenendabschnitt
- 7: Rillenendabschnitt
- 8: Rillengrund
- 8a: Grundabschnitt
- 8b: Grundabschnitt
- 9: Rillenwand
- 9a: Schrägfläche
- 9a^{I}: Flächenauslauf
- 9b: Vorsprungflanke
- 9c: Endfläche
- 9d: Wandabschnitt
- 9d^{I}: Wandabschnittsbereich
- 9d^{II}: Wandabschnittsbereich
- 10: Rillenwand
- 10a: Schrägfläche
- 10a^{I}: Flächenauslauf
- 10b: Vorsprungflanke
- 10c: Endfläche
- 10d: Wandabschnitt
- 10d^{I}: Wandabschnittsbereich
- 10d^{II}: Wandabschnittsbereich
- 11: Rillenkante
- 11a: Kantenhauptabschnitt
- 11a^{I}: innenseitiger Abschnittteil
- 11b: Kantenendabschnitt
- 11b^{I}: laufstreifenaußenseitiger Kantenunterabschnitt
- 11b^{II}: laufstreifeninnenseitiger Kantenunterabschnitt
- 11b': Kantenendabschnitt
- 11k: Knickstelle
- 12: Rillenkante
- 12a: Kantenhauptabschnitt
- 12a^{I}: innenseitiger Abschnittteil
- 12b: Kantenendabschnitt
- 12b': Kantenendabschnitt
- 12k: Knickstelle
- 13: Vorsprung
- 13a: Vorsprungkante
- 14: Vorsprung
- 14a: Vorsprungkante
- 15: Rillenverengung
- 16: Übergangsrundung
- a1, a2, a3: Abstand
- bₐ, b_{SF}, b_{RV}: Breite
- b_{QR}: maximale Breite
- c₁, c₂, c₃, c₄, c_{QR}: Länge
- L: Linie (seitlicher Rand der Bodenaufstandsfläche)
- L₁, L₂, L₃, L₄: Linie
- S₈, S₉, S₁₀, S₁₁, S₁₂, S₁₃: Pfeil (Sichtrichtung)
- t_{QR}: maximale Tiefe
- t_{b}, t_{VK}: Tiefe
- t_{VK}, _{MIN}, t_{VK}, _{MAX}: Wert
- T_{UR}: Profiltiefe
- Z₃: Detail
- α, β, γ, δ, ε, η, θ, κ: Winkel

## Patentansprüche

1. Fahrzeugluftreifen mit einem Laufstreifen mit zumindest einer durch eine Umfangsrille (2) begrenzten schulterseitigen Profilrippe (1) mit einer Rippenaußenfläche (1c) in der Laufstreifenperipherie sowie mit einem innerhalb der Bodenaufstandsfläche verlaufenden Rippeninnenabschnitt (1a) und einem außerhalb der Bodenaufstandsfläche verlaufenden Rippenaußenabschnitt (1b), wobei in der schulterseitigen Profilrippe (1) sowohl im Rippeninnenabschnitt (1a) als auch im Rippenaußenabschnitt (1b) verlaufende, vor der Umfangsrille (2) endende Querrillen (3, 4) mit einer in Umfangsrichtung ermittelten maximalen Breite (b_{QR}) von 3,0 mm bis 8,0 mm ausgebildet sind, wobei jede Querrille (3, 4) zwei an der Rippenaußenfläche (1c) liegende Rillenkanten (11, 12) aufweist und durch einen Rillengrund (8) und zwei von je einer der Rillenkanten (11, 12) ausgehenden Rillenwänden (9, 10) begrenzt ist, wobei die Rillenwände (9, 10) jeweils eine einzige von der Rillenkante (11, 12) ausgehende, in Erstreckungsrichtung der Querrille (3, 4) langgestreckte Schrägfläche (9a, 10a) aufweisen,
**dadurch gekennzeichnet,**
**dass** in jeder Querrille (3, 4) innerhalb des Rippeninnenabschnitts (1a) zwei von Abschnitten (9a, 9b, 9c, 10a, 10b, 10c) der Rillenwände (9, 10) begrenzte Vorsprünge (13, 14) ausgebildet sind, wobei diese Abschnitte (9a, 9b, 9c, 10a, 10b, 10c) je eine der Schrägflächen (9a, 10a), je eine Vorsprungflanke (9b, 10b) und je eine Endfläche (9c, 10c) sind,
wobei die Schrägfläche (9a, 10a) den jeweiligen Vorsprung (13, 14) in radialer Richtung und die Endfläche (9c, 10c) den jeweiligen Vorsprung (13, 14) an seinem laufstreifenaußenseitigen Ende begrenzt,
wobei die Schrägflächen (9a, 10a) an am laufstreifeninnenseitigen Ende der Querrille (3, 4) zusammenlaufenden Wandabschnitten (9d, 10d) der Rillenwände (9, 10) auslaufen und
wobei zwischen den Vorsprüngen (13, 14) eine laufstreifeninnenseitig über die Vorsprünge (13, 14) hinausverlaufende, von den zusammenlaufenden Wandabschnitten (9d, 10d) mitbegrenzte Rillenverengung (15) der Querrille (3, 4) verbleibt, zu welcher jeder Vorsprung (13, 14) durch die Vorsprungflanke (9b, 10b) begrenzt ist.

2. Fahrzeugluftreifen nach Anspruch 1, **dadurch gekennzeichnet, dass** die Vorsprungflanken (9b), über Vorsprungkanten (13a, 14a) an die Schrägflächen (9a, 10a) anschließen, wobei die Rillenverengung (15), im in Umfangsrichtung ausgerichteten Querschnitt betrachtet, eine zwischen in radialer Richtung durch die Vorsprungkanten (13a, 14a) verlaufenden Linien (L₄) ermittelte Breite (b_{RV}) von 30% bis 75%, insbesondere von 40% bis 70%, der maximalen Breite (b_{QR}) der Querrille (3, 4) aufweist.

3. Fahrzeugluftreifen nach Anspruch 2, **dadurch gekennzeichnet, dass** die Breite (b_{RV}) der Rillenverengung (15) 1,5 mm bis 3,5 mm beträgt.

4. Fahrzeugluftreifen nach einem der Ansprüche 1 bis 3, **dadurch gekennzeichnet, dass** die Vorsprungflanken (9b, 10b), im in Draufsicht in Umfangsrichtung ausgerichteten Querschnitt betrachtet, zur radialen Richtung jeweils unter einem Winkel (η) von 0° bis 8°, insbesondere von 2° bis 6°, verlaufen.

5. Fahrzeugluftreifen nach einem der Ansprüche 2 bis 4, **dadurch gekennzeichnet, dass** die Vorsprungkante (13a, 14a) in einer in radialer Richtung ermittelten Tiefe (t_{VK}) verläuft, welche in Richtung Laufstreifeninnenseite kontinuierlich zunimmt, wobei die Tiefe (t_{VK}) am laufstreifeninnenseitigen Ende der Vorsprungkante (13a, 14a) einen ersten Wert (t_{VK,MAX}) von vorzugsweise 1,4 mm bis 4,0 mm, besonders bevorzugt von bis zu 3,0 mm, und am laufstreifenaußenseitigen Ende der Vorsprungkante (13a, 14a) einen zweiten Wert (t_{VK,MIN}) von vorzugsweise 40% bis 65%, besonders bevorzugt von 50% bis 60%, des ersten Wertes (t_{VK,MAX}) aufweist.

6. Fahrzeugluftreifen nach einem der Ansprüche 2 bis 5, **dadurch gekennzeichnet, dass** die Schrägflächen (9a ,10a), im in Draufsicht in Umfangsrichtung ausgerichteten Querschnitt betrachtet, über die Erstreckung der Vorsprungkante (13a, 14a) eine Breite (b_{SF}) aufweisen, welche in Richtung Laufstreifeninnenseite kontinuierlich zunimmt.

7. Fahrzeugluftreifen nach einem der Ansprüche 1 bis 6, **dadurch gekennzeichnet, dass** die zusammenlaufenden Wandabschnitte (9d, 10d) der Rillenwände (9, 10) an einen Grundabschnitt (8b) des Rillengrundes (8) anschließen, welcher, im Längsschnitt durch die Querrille (3, 4) betrachtet, an seinem laufstreifeninnenseitigen Ende in radialer Richtung in einer Tiefe (t_{b}) von 1,0 mm bis 3,0 mm endet.

8. Fahrzeugluftreifen nach Anspruch 7, **dadurch gekennzeichnet, dass** der Grundabschnitt (8b), an welchem die zusammenlaufenden Wandabschnitte (9d, 10d) anschließen, im durch die Querrille (3, 4) verlaufenden Längsschnitt betrachtet, zur radialen Richtung unter einem konstanten Winkel (θ) von 50° bis 75°, insbesondere von 60° bis 70°, verläuft.

9. Fahrzeugluftreifen nach einem der Ansprüche 1 bis 8, **dadurch gekennzeichnet, dass** sich die Querrillen (3, 4), in Draufsicht betrachtet, jeweils aus einem teilweise im Rippeninnenabschnitt (1a) und teilweise im Rippenaußenabschnitt (1b) verlaufenden Rillenhauptabschnitt (5) und einem ausschließlich im Rippeninnenabschnitt (1a) ausgebildeten Rillenendabschnitt (6, 7) zusammensetzen, wobei sich zumindest eine Rillenkante (11) aus einem über den Rillenhauptabschnitt (5) reichenden Kantenhauptabschnitt (11a) und einem über den Rillenendabschnitt (6, 7) reichenden Kantenendabschnitt (11b, 11b') zusammensetzt, wobei die Kantenabschnitte (11a, 11b, 11b') an einer Knickstelle (11k) der Rillenkante (11) aneinander anschließen und miteinander einen Winkel (β) von 150° bis 165° einschließen, wobei die Querrille (3, 4) an der Knickstelle (11k) ihre maximale Breite (b_{QR}) aufweist und ausgehend von dieser Stelle die Breite der Querrille (3, 4) zu ihren Enden kontinuierlich abnimmt, wobei die Vorsprünge (13, 14) und die Rillenverengung (15) sowohl im Rillenhauptabschnitt (5) als auch im Rillenendabschnitt (6, 7) verlaufen und wobei vom Kantenendabschnitt (11b, 11b') der eine der beiden zusammenlaufenden Wandabschnitte (9d), an welchem die eine Schrägfläche (9a) ausläuft, ausgeht, sodass die Schrägfläche (9a) einen an den Wandabschnitt (9d) anschließenden Flächenauslauf (9a) aufweist.

10. Fahrzeugluftreifen nach Anspruch 9, **dadurch gekennzeichnet, dass** der Rillenhauptabschnitt (5) eine innerhalb des Rippeninnenabschnitts (1a) an der Rippenaußenfläche (1c) ermittelte, in axialer Richtung projizierte Länge (c₁) von 55% bis 80% der innerhalb des Rippeninnenabschnitts (1a) an der Rippenaußenfläche (1c) ermittelten, in axialer Richtung projizierten Länge (c_{QR}) der Querrille (3, 4) aufweist.

11. Fahrzeugluftreifen nach Anspruch 9 oder 10, **dadurch gekennzeichnet, dass** Querrillen (3) vorgesehen sind, bei welchen sich der Kantenendabschnitt (11b) der einen Rillenkante (11), in Draufsicht betrachtet, aus einem gerade verlaufenden, laufstreifenaußenseitigen Kantenunterabschnitt (11b^{I}) und einem bogenförmig verlaufenden, laufstreifeninnenseitigen Kantenunterabschnitt (11b^{II}) zusammensetzt, wobei die Schrägfläche (9a) an einem vom laufstreifenaußenseitigen Kantenunterabschnitt (11b^{I}) ausgehenden Wandabschnittsbereich (9d^{I}) des Wandabschnitts (9d) endet und wobei der laufstreifeninnenseitige Kantenunterabschnitt (11b^{II}) eine an der Rippenaußenfläche (1c) ermittelte, in axialer Richtung projizierte Länge (c₃) von vorzugsweise 20% bis 26% der an der Rippenaußenfläche (1c) ermittelten, in axialer Richtung projizierte Länge (c₂) des Rillenendabschnitts (6) aufweist.

12. Fahrzeugluftreifen nach einem der Ansprüche 9 bis 11, **dadurch gekennzeichnet, dass** Querrillen (4) vorgesehen sind, bei welchen der Kantenendabschnitt (11b') der einen Rillenkante (11), in Draufsicht betrachtet, gerade verläuft.

13. Fahrzeugluftreifen nach einem der Ansprüche 9 bis 12, **dadurch gekennzeichnet, dass** Querrillen (3) vorgesehen sind, bei welchen die zweite Rillenkante (12) durchgehend gebogen verläuft, wobei die von dieser Rillenkante (12) ausgehende, den Vorsprung (14) in radialer Richtung begrenzende Schrägfläche (10a) an einem den Vorsprung (14) mitbegrenzenden, zum Rillengrund (8) verlaufenden Wandabschnittsbereich (10d^{I}) des Wandabschnitts (10d) ausläuft, sodass die Schrägfläche (10a) einen an den Wandabschnittsbereich (10d^{I}) anschließenden Flächenauslauf (10a^{I}) aufweist.

14. Fahrzeugluftreifen nach einem der Ansprüche 9 bis 13, **dadurch gekennzeichnet, dass** Querrillen (4) vorgesehen sind, bei welchen sich die zweite Rillenkante (12) aus einem über den Rillenhauptabschnitt (5) reichenden Kantenhauptabschnitt (12a) und einem über den Rillenendabschnitt (7) reichenden Kantenendabschnitt (12b') zusammensetzt, wobei die Kantenabschnitte (12a, 12b') einen Winkel (γ) von 140° bis 150° einschließen, wobei vom Kantenendabschnitt (12b') der andere der beiden zusammenlaufenden Wandabschnitte (10d), an welchem die andere Schrägfläche (10a) ausläuft, ausgeht.

15. Fahrzeugluftreifen nach einem der Ansprüche 1 bis 14, **dadurch gekennzeichnet, dass** die Schrägflächen (9a, 10a) an der Rippenaußenfläche (1c) eine in die axiale Richtung projizierte Länge (c₄) von 40% bis 70%, insbesondere von 45% bis 65%, der in die axiale Richtung projizierten Länge (c_{QR}) der Querrille (3, 4) aufweist.

## Claims

1. Pneumatic vehicle tyre having tread having at least one shoulder-side profile rib (1) which is delimited by a circumferential groove (2) and has a rib outer face (1c) in the tread periphery, and a rib inner portion (1a) extending within the ground contact area and a rib outer portion (1b) extending outside the ground contact area, wherein, in the shoulder-side profile rib (1), transverse grooves (3, 4) extending both in the rib inner portion (1a) and in the rib outer portion (1b) and ending before the circumferential groove (2) are formed with a maximum width (b_{QR}) of 3.0 mm to 8.0 mm determined in the circumferential direction, wherein each transverse groove (3, 4) has two groove edges (11, 12) lying on the rib outer face (1c) and is delimited by a groove base (8) and two groove walls (9, 10) proceeding in each case from one of the groove edges (11, 12), wherein the groove walls (9, 10) have in each case a single oblique face (9a, 10a) which proceeds from the groove edge (11, 12) and is elongate in the direction of extent of the transverse groove (3, 4),
**characterized in that**
formed in each transverse groove (3, 4), within the rib inner portion (1a), are two projections (13, 14) which are delimited by portions (9a, 9b, 9c, 10a, 10b, 10c) of the groove walls (9, 10), wherein these portions (9a, 9b, 9c, 10a, 10b, 10c) are in each case one of the oblique faces (9a, 10a), in each case one projection flank (9b, 10b) and in each case one end face (9c, 10c),
wherein the oblique face (9a, 10a) delimits the respective projection (13, 14) in the radial direction, and the end face (9c, 10c) delimits the respective projection (13, 14) at its end proximal to the outside of the tread,
wherein the oblique faces (9a, 10a) run out at wall portions (9d, 10d) of the groove walls (9, 10) that converge at the end of the transverse groove (3, 4) proximal to the inside of the tread, and
wherein a groove constriction (15) of the transverse groove (3, 4), which on the inside proximal to the treads extends beyond the projections (13, 14) and is conjointly delimited by the converging wall portions (9d, 10d) remains between the projections (13, 14), each projection (13, 14) being delimited by the projection flank (9b, 10b) in relation to said groove constriction.

2. Pneumatic vehicle tyre according to Claim 1, **characterized in that** the projection flanks (9b) adjoin the oblique faces (9a, 10a) by way of projection edges (13a, 14a), wherein the groove constriction (15), when viewed in the cross section aligned in the circumferential direction, has a width (b_{RV}), determined between lines (L₄) extending through the projection edges (13a, 14a) in the radial direction, of 30% to 75%, in particular of 40% to 70%, of the maximum width (b_{QR}) of the transverse groove (3, 4).

3. Pneumatic vehicle tyre according to Claim 2, **characterized in that** the width (b_{RV}) of the groove constriction (15) is 1.5 mm to 3.5 mm.

4. Pneumatic vehicle tyre according to one of Claims 1 to 3, **characterized in that** the projection flanks (9b, 10b), when viewed in the cross section which in top view is aligned in the circumferential direction, extend in each case at an angle (η) of 0° to 8°, in particular of 2° to 6°, in relation to the radial direction.

5. Pneumatic vehicle tyre according to one of Claims 2 to 4, **characterized in that** the projection edge (13a, 14a) extends at a depth (t_{VK}) which is determined in the radial direction and increases continuously in the direction of the inside of the tread, wherein the depth (t_{VK}) at the end of the projection edge (13a, 14a) proximal to the inside of the tread has a first value (t_{VK,MAX}) of preferably 1.4 mm to 4.0 mm, particularly preferably of up to 3.0 mm, and at the end of the projection edge (13a, 14a) proximal to the outside of the tread has a second value (t_{VK,MIN}) of preferably 40% to 65%, particularly preferably of 50% to 60%, of the first value (t_{VK,MAX}).

6. Pneumatic vehicle tyre according to one of Claims 2 to 5, **characterized in that** the oblique faces (9a, 10a), when viewed in the cross section which in top view is aligned in the circumferential direction, have across the extent of the projection edge (13a, 14a) a width (b_{SF}) which increases continuously in the direction of the inside of the tread.

7. Pneumatic vehicle tyre according to one of Claims 1 to 6, **characterized in that** the converging wall portions (9d, 10d) of the groove walls (9, 10) adjoin a base section (8b) of the groove base (8), which, when viewed in the longitudinal section through the transverse groove (3, 4), at its end proximal to the inside of the tread in the radial direction ends at a depth (t_{b}) of 1.0 mm to 3.0 mm.

8. Pneumatic vehicle tyre according to Claim 7, **characterized in that** the base section (8b), to which the converging wall portions (9d, 10d) are connected, is viewed in the longitudinal section extending through the transverse groove (3, 4), to the radial direction at a constant angle (θ) of 50° to 75°, in particular of 60° to 70°.

9. Pneumatic vehicle tyre according to one of Claims 1 to 8, **characterized in that** the transverse grooves (3, 4), when viewed in top view, are each composed of a groove main portion (5) partially extending in the rib inner portion (1a) and partially extending in the rib outer portion (1b) and a groove end portion (6, 7) formed exclusively in the rib inner portion (1a), wherein at least one groove edge (11) is composed of an edge main portion (11a) extending over the groove main portion (5) and an edge end portion (11b, 11b') extending over the groove end portion (6, 7), wherein the edge portions (11a, 11b, 11b') adjoin one another at a kink (11k) of the groove edge (11) and conjointly enclose an angle (β) of 150° to 165°, wherein the transverse groove (3, 4) has its maximum width (b_{QR}) at the kink (11k) and, proceeding from this location, the width of the transverse groove (3, 4) decreases continuously to the end of the latter, wherein the projections (13, 14) and the groove constriction (15) extend both in the groove main portion (5) and in the groove end portion (6, 7), and wherein the one of the two converging wall portions (9d) on which the one oblique face (9a) runs out, proceeds from the edge end portion (11b, 11b') in such a way that the oblique face (9a) has a face run-out (9a) which adjoins the wall portion (9d).

10. Pneumatic vehicle tyre according to Claim 9, **characterized in that** the groove main portion (5) has a length (c₁), determined on the rib outer face (1c) within the rib inner portion (1a) and projected in the axial direction, of 55% to 80% of the length (c_{QR}) of the transverse groove (3, 4), determined on the rib outer face (1c) within the rib inner portion (1a) and projected in the axial direction.

11. Pneumatic vehicle tyre according to Claim 9 or 10, **characterized in that** provided are transverse grooves (3) in which the edge end portion (11b) of the one groove edge (11), when viewed in top view, consists of a straight edge sub-portion (11b^{I}) which extends proximal to the outside of the tread, and an arcuate edge sub-portion (11b^{II}) which extends proximal to the inside of the tread, wherein the oblique face (9a) ends at a wall portion region (9d^{I}) of the wall portion (9d) that proceeds from the edge sub-portion (11b^{I}) proximal to the outside of the tread, and wherein the edge sub-portion (11b^{II}) proximal to the inside of the tread has a length (c₃), determined on the rib outer face (1c) and projected in the axial direction, of preferably 20% to 26% of the length (c₂), determined on the rib outer face (1c) and projected in the axial direction, of the groove end portion (6).

12. Pneumatic vehicle tyre according to one of Claims 9 to 11, **characterized in that** transverse grooves (4) are provided, in which the edge end portion (11b') of the one groove edge (11), viewed in top view, extends in a straight manner.

13. Pneumatic vehicle tyre according to one of Claims 9 to 12, **characterized in that** transverse grooves (3) are provided, in which the second groove edge (12) is continuously curved, wherein the oblique face (10a), which proceeds from this groove edge (12) and delimits the projection (14) in the radial direction, runs out at a wall portion region (10d^{I}) of the wall portion (10d), which conjointly delimits the projection (14) and extends to the groove base (8), in such a way that the oblique face (10a) has a face run-out (10a^{I}) which adjoins the wall portion region (10d^{I}).

14. Pneumatic vehicle tyre according to one of Claims 9 to 13, **characterized in that** transverse grooves (4) are provided, in which the second groove edge (12) consists of an edge main portion (12a) extending over the groove main portion (5) and an edge end portion (12b') extending over the groove end portion (7), wherein the edge portions (12a, 12b') enclose an angle (γ) of 140° to 150°, wherein the other of the two converging wall portions (10d), on which the other oblique face (10a) runs out, proceeds from the edge end portion (12b').

15. Pneumatic vehicle tyre according to one of Claims 1 to 14, **characterized in that** the oblique faces (9a, 10a) have on the rib outer face (1c) a length (c₄), projected in the axial direction, of 40% to 70%, in particular of 45% to 65% of the length (c_{QR}), projected in the axial direction, of the transverse groove (3, 4).

## Revendications

1. Pneumatique de véhicule avec une bande de roulement avec au moins une nervure profilée (1) côté épaulement, délimitée par une rainure circonférentielle (2), avec une surface extérieure de nervure (1c) dans la périphérie de la bande de roulement ainsi qu'avec une section intérieure de nervure (1a) s'étendant à l'intérieur de la surface de contact avec le sol et une section extérieure de nervure (1b) s'étendant à l'extérieur de la surface de contact avec le sol, des rainures transversales (3, 4) s'étendant aussi bien dans la section intérieure de nervure (1a) que dans la section extérieure de nervure (1b), se terminant avant la rainure circonférentielle (2), étant réalisées dans la nervure profilée (1) côté épaulement avec une largeur maximale (b_{QR}) déterminée dans la direction circonférentielle de 3,0 mm à 8,0 mm, chaque rainure transversale (3, 4) présentant deux bords de rainure (11, 12) situés sur la surface extérieure de nervure (1c) et étant délimitée par un fond de rainure (8) et deux parois de rainure (9, 10) partant chacune de l'un des bords de rainure (11, 12), les parois de rainure (9, 10) présentant chacune une seule surface oblique (9a, 10a) partant du bord de rainure (11, 12), s'étendant dans la direction d'extension de la rainure transversale (3, 4),
**caractérisé en ce que**
dans chaque rainure transversale (3, 4), deux saillies (13, 14) délimitées par des sections (9a, 9b, 9c, 10a, 10b, 10c) des parois de rainure (9, 10) sont réalisées à l'intérieur de la section intérieure de nervure (1a), ces sections (9a, 9b, 9c, 10a, 10b, 10c) étant respectivement l'une des surfaces obliques (9a, 10a), un flanc de saillie (9b, 10b) et une surface d'extrémité (9c, 10c),
la surface oblique (9a, 10a) délimitant la saillie respective (13, 14) dans la direction radiale et la surface d'extrémité (9c, 10c) délimitant la saillie respective (13, 14) à son extrémité côté extérieur de la bande de roulement,
les surfaces obliques (9a, 10a) se terminant sur des sections de paroi (9d, 10d) des parois de rainure (9, 10) convergeant à l'extrémité côté intérieur de la bande de roulement de la rainure transversale (3, 4), et
un rétrécissement de rainure (15) de la rainure transversale (3, 4) s'étendant côté intérieur de la bande de roulement au-delà des saillies (13, 14), délimité conjointement par les sections de paroi convergentes (9d, 10d), restant entre les saillies (13, 14), vers lequel chaque saillie (13, 14) est délimitée par le flanc de saillie (9b, 10b).

2. Pneumatique de véhicule selon la revendication 1, **caractérisé en ce que** les flancs de saillie (9b) se raccordent aux surfaces obliques (9a, 10a) par l'intermédiaire de bords de saillie (13a, 14a), le rétrécissement de rainure (15), considéré en coupe transversale orientée dans la direction circonférentielle, présentant une largeur (b_{RV}), déterminée entre des lignes (L₄) passant par les bords de saillie (13a, 14a) dans la direction radiale, de 30 % à 75 %, notamment de 40 % à 70 %, de la largeur maximale (b_{QR}) de la rainure transversale (3, 4).

3. Pneumatique de véhicule selon la revendication 2, **caractérisé en ce que** la largeur (b_{RV}) du rétrécissement de rainure (15) est de 1,5 mm à 3,5 mm.

4. Pneumatique de véhicule selon l'une quelconque des revendications 1 à 3, **caractérisé en ce que** les flancs de saillie (9b, 10b), considérés en coupe transversale orientée dans la direction circonférentielle en vue de dessus, s'étendent par rapport à la direction radiale respectivement sous un angle (η) de 0° à 8°, notamment de 2° à 6°.

5. Pneumatique de véhicule selon l'une quelconque des revendications 2 à 4, **caractérisé en ce que** le bord de saillie (13a, 14a) s'étend à une profondeur (t_{VK}) déterminée dans la direction radiale, qui augmente de manière continue en direction du côté intérieur de la bande de roulement, la profondeur (t_{VK}) à l'extrémité côté intérieur de la bande de roulement du bord de saillie (13a, 14a) présentant une première valeur (t_{VK,MAX}) de préférence de 1,4 mm à 4,0 mm, de manière particulièrement préférée de jusqu'à 3,0 mm, et à l'extrémité côté extérieur de la bande de roulement du bord de saillie (13a, 14a) une deuxième valeur (t_{VK,MIN}) de préférence de 40 % à 65 %, de manière particulièrement préférée de 50 % à 60 %, de la première valeur (t_{VK,MAX}).

6. Pneumatique de véhicule selon l'une quelconque des revendications 2 à 5, **caractérisé en ce que** les surfaces obliques (9a, 10a), considérées en coupe transversale orientée dans la direction circonférentielle en vue de dessus, présentent une largeur (b_{SF}) sur l'extension du bord de saillie (13a, 14a), qui augmente de manière continue en direction du côté intérieur de la bande de roulement.

7. Pneumatique de véhicule selon l'une quelconque des revendications 1 à 6, **caractérisé en ce que** les sections de paroi convergentes (9d, 10d) des parois de rainure (9, 10) se raccordent à une section de base (8b) du fond de rainure (8) qui, considérée en coupe longitudinale à travers la rainure transversale (3, 4), se termine à son extrémité côté intérieur de la bande de roulement dans la direction radiale à une profondeur (t_{b}) de 1,0 mm à 3,0 mm.

8. Pneumatique de véhicule selon la revendication 7, **caractérisé en ce que** la section de base (8b) à laquelle se raccordent les sections de paroi convergentes (9d, 10d), considérée en coupe longitudinale passant à travers la rainure transversale (3, 4), s'étend par rapport à la direction radiale sous un angle constant (θ) de 50° à 75°, notamment de 60° à 70°.

9. Pneumatique de véhicule selon l'une quelconque des revendications 1 à 8, **caractérisé en ce que** les rainures transversales (3, 4), considérées en vue de dessus, se composent chacune d'une section principale de rainure (5) s'étendant en partie dans la section intérieure de nervure (1a) et en partie dans la section extérieure de nervure (1b) et d'une section d'extrémité de rainure (6, 7) réalisée exclusivement dans la section intérieure de nervure (1a), au moins un bord de rainure (11) se composant d'une section principale de bord (11a) s'étendant sur la section principale de rainure (5) et d'une section d'extrémité de bord (11b, 11b') s'étendant sur la section d'extrémité de rainure (6, 7), les sections de bord (11a, 11b, 11b') se raccordant les unes aux autres à un point d'inflexion (11k) du bord de rainure (11) et formant entre elles un angle (β) de 150° à 165°, la rainure transversale (3, 4) présentant sa largeur maximale (b_{QR}) au point d'inflexion (11k) et, à partir de ce point, la largeur de la rainure transversale (3, 4) diminuant de manière continue vers ses extrémités, les saillies (13, 14) et le rétrécissement de rainure (15) s'étendant aussi bien dans la section principale de rainure (5) que dans la section d'extrémité de rainure (6, 7), et l'une des deux sections de paroi (9d) convergentes, sur laquelle se termine l'une des surfaces obliques (9a), partant de la section d'extrémité de bord (11b, 11b'), de telle sorte que la surface oblique (9a) présente une sortie de surface (9a) se raccordant à la section de paroi (9d).

10. Pneumatique de véhicule selon la revendication 9, **caractérisé en ce que** la section principale de rainure (5) présente une longueur (c₁) projetée dans la direction axiale, déterminée à l'intérieur de la section intérieure de nervure (1a) sur la surface extérieure de nervure (1c), de 55 % à 80 % de la longueur (c_{QR}) projetée dans la direction axiale de la rainure transversale (3, 4), déterminée à l'intérieur de la section intérieure de nervure (1a) sur la surface extérieure de nervure (1c).

11. Pneumatique de véhicule selon la revendication 9 ou 10, **caractérisé en ce qu'**il est prévu des rainures transversales (3) dans lesquelles la section d'extrémité de bord (11b) d'un bord de rainure (11) se compose, considérée en vue de dessus, d'une section inférieure de bord (11b^{I}) côté extérieur de la bande de roulement s'étendant en ligne droite et d'une section inférieure de bord (11b^{II}) côté intérieur de la bande de roulement s'étendant en arc, la surface oblique (9a) se terminant au niveau d'une zone de section de paroi (9d^{I}) de la section de paroi (9d) partant de la section inférieure de bord (11b^{I}) côté extérieur de la bande de roulement et la section inférieure de bord (11b^{II}) côté intérieur de la bande de roulement présentant une longueur (c₃) projetée dans la direction axiale, déterminée sur la surface extérieure de nervure (1c), de préférence de 20 % à 26 % de la longueur (c₂) projetée dans la direction axiale, déterminée sur la surface extérieure de nervure (1c), de la section d'extrémité de rainure (6).

12. Pneumatique de véhicule selon l'une quelconque des revendications 9 à 11, **caractérisé en ce qu'**il est prévu des rainures transversales (4) dans lesquelles la section d'extrémité de bord (11b') d'un bord de rainure (11) s'étend en ligne droite, considéré en vue de dessus.

13. Pneumatique de véhicule selon l'une quelconque des revendications 9 à 12, **caractérisé en ce qu'**il est prévu des rainures transversales (3) dans lesquelles le deuxième bord de rainure (12) s'étend en étant courbé de manière continue, la surface oblique (10a) partant de ce bord de rainure (12), délimitant la saillie (14) dans la direction radiale, se terminant sur une zone de section de paroi (10d^{I}) de la section de paroi (10d) délimitant conjointement la saillie (14), s'étendant vers le fond de rainure (8), de telle sorte que la surface oblique (10a) présente une sortie de surface (10a^{I}) se raccordant à la zone de section de paroi (10d^{I}).

14. Pneumatique de véhicule selon l'une quelconque des revendications 9 à 13, **caractérisé en ce qu'**il est prévu des rainures transversales (4) dans lesquelles le deuxième bord de rainure (12) se compose d'une section principale de bord (12a) s'étendant sur la section principale de rainure (5) et d'une section d'extrémité de bord (12b') s'étendant sur la section d'extrémité de rainure (7), les sections de bord (12a, 12b') formant un angle (γ) de 140° à 150°, l'autre des deux sections de paroi (10d) convergentes sur laquelle se termine l'autre surface oblique (10a) partant de la section d'extrémité de bord (12b').

15. Pneumatique de véhicule selon l'une quelconque des revendications 1 à 14, **caractérisé en ce que** les surfaces obliques (9a, 10a) sur la surface extérieure de nervure (1c) présentent une longueur (c₄) projetée dans la direction axiale de 40 % à 70 %, notamment de 45 % à 65 %, de la longueur (c_{QR}) projetée dans la direction axiale de la rainure transversale (3, 4).
